# EUROPÄISCHE PATENTANMELDUNG

(11) **EP 4 653 345 A1**
(43) Veröffentlichungstag der Anmeldung: **26.11.2025**
(21) Anmeldenummer: 25177844.5
(22) Anmeldetag: 21.05.2025
(51) Int. Cl.: B65G 1/08, B65G 13/075

(54) **ROLLENBAHN ZUR FÜHRUNG VON MEHREREN HINTEREINANDER ANGEORDNETEN LAGEREINHEITEN**

(30) Priorität: 23.05.2024 DE 102024114464
(71) Anmelder: Schmale Logtec GmbH, 34479 Breuna (DE)
(72) Erfinder: Schäfers, Marco, 33165 Lichtenau (DE)
(74) Vertreter: Walther Bayer Faber Patentanwälte PartGmbB

(57) **Zusammenfassung**

Gegenstand der Erfindung ist eine Rollenbahn (1) zur Führung von mehreren hintereinander angeordneten Lagereinheiten (100), insbesondere für ein Durchlaufregal, mit wenigstens zwei beabstandet zueinander angeordneten Rollenleisten (10), aufweisend eine Vielzahl von Rollen (11) zum Tragen der Lagereinheiten (100) und einer Anzahl von Bremsrollen (12) zum Abbremsen der Lagereinheiten (100), und wobei zumindest eine Vorrichtung (13) zur Vereinzelung der Lagereinheiten (100) eingerichtet ist. Erfindungsgemäß ist vorgesehen, dass die Vorrichtung (13) zur Vereinzelung der Lagereinheiten (100) eine Aktivierungseinheit (14) aufweist, die bei einem Überlauf einer Lagereinheit (100) aktivierbar ist, und wobei die Vorrichtung (13) eine Bremseinheit (15) zur Einwirkung auf die Bremsrolle (12) aufweist, die über ein Koppelelement (16) von der Aktivierungseinheit (14) blockierbar ist und um eine nachfolgende Lagereinheit (100) in Kontakt mit der Bremsrolle (12) in den Stand zu versetzen.

## Beschreibung

Die Erfindung betrifft eine Rollenbahn zur Führung von mehreren hintereinander angeordneten Lagereinheiten, insbesondere für ein Durchlaufregal, mit wenigstens zwei beabstandet zueinander angeordneten Rollenleisten, aufweisend eine Vielzahl von Rollen zum Tragen der Lagereinheiten und einer Anzahl von Bremsrollen zum Abbremsen der Lagereinheiten, und wobei zumindest eine Vorrichtung zur Vereinzelung der Lagereinheiten eingerichtet ist. Die Erfindung richtet sich ferner auf ein Durchlaufregal mit einer solchen Rollenbahn zum Durchlauf und damit zur Bereitstellung der Lagereinheiten, also beispielsweise Transportkisten, Paletten, Behältnisse aller Art wie Kartons und dergleichen, oder die Lagereinheit betrifft ein Produkt selbst, das über die Rollenbahn geführt ist.

### STAND DER TECHNIK

Eine gattungsbildende Rollenbahn zur Führung von mehreren hintereinander angeordneten Lagereinheiten ist beispielsweise aus der DE 44 13 475 A1 bekannt. Die Anordnung eines Verriegelungshebels im Bewegungsbereich der Lagereinheiten ermöglicht es, diese so zu vereinzeln, dass die Lagereinheiten nicht aufeinander aufstauen. Gewöhnlich sind die Rollenbahnen mit einem Gefälle montiert, sodass sich die Lagereinheiten durch Schwerkraft bedingt in ihrer Förderrichtung über die Rollenbahn bewegen können. Um die Geschwindigkeit der Lagereinheiten über der schräg verlaufenden Rollenbahn zu drosseln, sind Bremsrollen bekannt, die in Kontakt mit der Unterseite der Lagereinheiten eine Bremswirkung erzeugen und in diskreten Positionen zwischen der Vielzahl der Rollen zum Tragen der Lagereinheiten angeordnet sind.

Der prinzipielle Aufbau einer Rollenleiste ist auf der DE 94 10 424 U1 bekannt. Die Rollenleisten weisen zwei über einen Grundabschnitt miteinander verbundene Schenkel in einer U-Form auf, und zwischen den beiden Schenkeln ist eine Vielzahl von Achsen eingebracht, auf der die Rollen zum Tragen angebracht sind, wobei auch die Bremsrolle in gleicher Weise zwischen den Schenkeln angeordnet werden kann.

Die Anordnung von Bremsrollen ist beispielsweise aus der DE 20 2009 001 179 U1 bekannt, wobei die Bremswirkung dann unterbrochen wird, wenn die gesamte Rollenleiste abgesenkt wird, in der auch die Bremsrollen eingebracht sind und diese damit außer Kontakt mit der Unterseite der Lagereinheit gebracht werden. Die Bremsrollen können dabei in gleicher Weise wie auch die Rollen zum Tragen der Lagereinheiten in oder an der Rollenleiste angebracht werden, beispielsweise in entsprechenden Abständen zueinander, sodass mehrere gewöhnliche Rollen zum Tragen zwischen zwei Bremsrollen angeordnet sind.

Grundsätzlich besteht die Notwendigkeit, die Lagereinheiten voneinander zu separieren oder zumindest zu verhindern, dass die Lagereinheiten auf der mit einem Gefälle angeordneten Rollenbahn gegeneinander drücken. Vor allem wenn eine oder mehrere sehr schwere Lagereinheiten auf eine voreilende sehr leichte Lagereinheit folgen und gegen diese drücken können. Hierfür sind Separiereinrichtungen vorgesehen, die das Auflaufen der Lagereinheiten aufeinander verhindern.

Eine Separiereinrichtung zur Separierung der Lagereinheiten auf der mit einem Gefälle angeordneten Rollenbahn zeigt die DE 103 03 508 A1. Auch gemäß dieser technischen Lehre dient ein Sperrglied zur Stoppfunktion der Lagereinheit auf der Rollenbahn, das in den Bewegungsbereich der Lagereinheiten eingefahren werden kann. Insbesondere wenn eine vorauseilende Lagereinheit bereits eine Position eingenommen hat, ist es notwendig, zu verhindern, dass die nachlaufenden Lagereinheiten nicht auf die voraus stehende Lagereinheit aufläuft.

In ähnlicher Weise ist eine weitere Separiereinrichtung aus der DE 20 2016 002 292 U1 bekannt.

Grundsätzlich besteht die Bestrebung, eine Separiereinrichtung möglichst einfach aufzubauen, zusätzlich die an sich bekannte Bremswirkung durch die Anordnung von Bremsrollen in der Rollenbahn zu erzielen, wobei zugleich das Nachrücken der weiteren Lagereinheiten auf der Rollenbahn geregelt werden soll, wenn beispielsweise eine vorderste Lagereinheit von der Rollenbahn entnommen wird. Derartige Einrichtungen werden in der Regel ohne elektrische Sensorik und elektrische Aktoren vorgesehen, und basieren auf rein mechanischen Wirkprinzipien, die robust und langlebig sein müssen.

### OFFENBARUNG DER ERFINDUNG

Die Aufgabe der Erfindung ist die weitere Verbesserung einer Rollenbahn zur Führung von mehreren hintereinander angeordneten Lagereinheiten mit einer entsprechenden Separiereinrichtung der einzelnen Lagereinheiten. Die dazu eingerichtete Vorrichtung zur Vereinzelung der Lagereinheiten in einer hintereinander vorgesehenen Anordnung soll dabei möglichst einfach aufgebaut sein. Zudem sollen die Bremsrollen in an sich bekannter Weise zum Einsatz kommen.

Diese Aufgabe wird ausgehend von einer Rollenbahn gemäß dem Oberbegriff des Anspruches 1 sowie mittels einem Durchlaufregal gemäß Anspruch 12 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Vorrichtung zur Vereinzelung der Lagereinheiten eine Aktivierungseinheit aufweist, die bei einem Überlauf einer Lagereinheit aktivierbar ist, und wobei die Vorrichtung eine Bremseinheit zur Einwirkung auf die Bremsrolle aufweist, die über ein Koppelelement von der Aktivierungseinheit abbremsbar oder blockierbar ist und um eine nachfolgende Lagereinheit in Kontakt mit der Bremsrolle in den Stand zu versetzen.

Kerngedanke der Erfindung ist die Nutzung der Bremsrolle sowohl zur an sich bekannten Verzögerung der Lagereinheiten auf der mit einem Gefälle eingerichteten Rollenbahn, als auch zum Halten der Lagereinheit an einer bestimmten Position, insbesondere in Abhängigkeit einer vorauseilenden Lagereinheit. Durch die somit mehrfache Nutzung der Bremsrolle sowohl zum Verzögern der Lagereinheit, also zur Einregulierung der Geschwindigkeit der Lagereinheit auf der Rollenbahn, als auch zur Festsetzung der Lagereinheit an einer vorgegebenen Position ergibt sich ein einfacher Aufbau der Rollenbahn mit einer nur geringen Anzahl von weiteren Bauteilen, und die Bremsrollen dienen zugleich als Herzstück der Bremseinheit. Es ist lediglich die Einrichtung einer Aktivierungseinheit notwendig, da die Bremseinheit im Wesentlichen aus der Bremsrolle selbst besteht, und es ist weiterhin nur ein Koppelelement notwendig, das sich zwischen der Aktivierungseinheit an einer ersten Position in der Rollenbahn und der Bremseinheit an einer zweiten Position in der Rollenbahn erstreckt.

Befindet sich in Richtung des Gefälles eine vorauseilende Lagereinheit auf der Rollenbahn in Kontakt mit der Aktivierungseinheit, so aktiviert diese Lagereinheit die Aktivierungseinheit und führt zu einem Blockieren der Bremsrolle. Gelangt eine nacheilende Lagereinheit nun in Kontakt mit der abgebremsten oder blockierten Bremsrolle, so führt dies zu einem Stillstand der nacheilenden Lagereinheit, ohne dass diese die vorauseilende Lagereinheit berührt.

So kann ein Aufstauen mehrerer Lagereinheiten hintereinander vermieden werden, und mit einer entsprechenden Einrichtung mehrerer Vorrichtungen zur Vereinzelung der Lagereinheiten in einer gemeinsamen Rollenbahn hintereinander kann in Laufrichtung der Rollenbahn das Ziel erreicht werden, dass mehrere Lagereinheiten hintereinander jeweils gleich beabstandet zueinander in einer Ruheposition verbleiben. Wird eine vorderste Lagereinheit entnommen, und gibt so die Aktivierungseinheit über das Koppelelement die Bremsrolle der Bremseinheit wieder frei, kann die nachfolgende Lagereinheit nachrücken, bis diese wiederum die vorderste Aktivierungseinheit aktiviert und die Bremseinheit bewirkt mit der abgebremsten oder blockierten Bremsrolle das weitere Nachlaufen der nächsten, nacheilenden Lagereinheit. Dieses Prinzip kann auch vielfach fortgesetzt werden, da bewirkt werden kann, dass eine größere Anzahl von Lagereinheiten nacheinander auf der Rollenbahn nachrücken, wenn lediglich eine erste vordere Lagereinheit entnommen wurde.

Die Lagereinheiten im vorliegenden Sinne betreffen beispielsweise Paletten, Transportkisten, Kartons oder dergleichen. Dabei ist es gewollt, dass die Bremseinheit die Bremsrolle vollständig blockiert. Das Blockieren der Bremsrolle kann dabei reibschlüssig oder formschlüssig erfolgen, indem ein entsprechendes Blockiermittel der Bremseinheit auf die Bremsrolle reibschlüssig oder formschlüssig einwirkt.

Das Koppelelement kann als Zugstange oder als Druckstange ausgebildet sein, um mittels einer durch die Aktivierungseinheit erzeugbaren Druckkraft oder Zugkraft die Bremseinheit zu aktivieren. Eine Aktivierung der Bremseinheit bedeutet, dass die Bremseinheit die Bremsrolle stark verlangsamt oder vorzugsweise vollständig blockiert, und bei einer Deaktivierung der Bremseinheit wird die Bremsrolle wieder freigegeben, sodass diese die gewöhnliche Bremswirkung auf die Lagereinheit ausüben kann. Das Koppelelement kann ein Flachmaterial oder beispielsweise auch eine runde oder mit einem eckigen Querschnitt ausgebildete Zug- oder Druckstange bilden, wobei sich insbesondere ein Flachmaterial eignet, etwa ein ausgestanztes Blech, das zwischen dem Bodenabschnitt der Rollenleiste und den Rollen zum Tragen der Lagereinheiten verlaufen kann. Das Koppelelement weist vorzugsweise eine Länge auf, mit der dieses mehrere Rollen in der Rollenleiste unterläuft, die lediglich zum Tragen der Lagereinheiten dienen. Insofern erstreckt sich das Koppelelement von der Aktivierungseinheit bis hin zu Bremsrolle über mehrere Tragrollen hinweg, um auf die Bremsrolle wenigstens mittelbar einzuwirken. Die Bremseinheit kann für die Wechselwirkung mit der Bremsrolle ein Bremselement aufweisen, das gegen die Bremsrolle zur Anlage gelangt, wenn die Aktivierungseinheit aktiviert wird. Das Bremselement ist beispielsweise aus einem Kunststoff oder einem Hartgummi hergestellt, wobei die Bremsrolle eine Gummierung auf der Umfangsfläche aufweist, um eine Rutschhemmung der Lagereinheit in Kontakt mit der Bremsrolle zu erzielen. Gelangt nun das Bremselement, also insbesondere aus einem Kunststoff und vorzugsweise aus einem Hartgummi, gegen die Gummierung der Bremsrolle, wird eine sehr gute Bremswirkung erzielt, um die Bremsrolle schließlich zu blockieren. Insofern ist der Kontakt zwischen der Bremseinheit, insbesondere dem Bremselement, und der Bremsrolle als Reibkontakt ausgebildet, um über einen Reibschluss das Blockieren der Bremsrolle zu bewirken. Es ist jedoch auch denkbar, dass die Bremseinheit einen Formschluss mit der Bremsrolle erzeugt, beispielsweise über einen Stift oder einen Blockierzapfen, der in eine entsprechende Geometrie in oder an der Bremsrolle eingreift. Beispielsweise könnte die Bremsrolle auch einen Zahnkranz aufweisen, in den ein Blockierelement eingefahren und zum Lösen wieder ausgefahren wird, wobei das Blockierelement am Koppelelement angeordnet ist.

Dass Bremselement kann mit Blick auf die Anordnung der Aktivierungseinheit vor oder hinter der Bremsrolle angeordnet sein, sodass sowohl durch eine Druckbewegung als auch durch eine Zugbewegung im Koppelement das Bremselement gegen die Bremsrolle zur Anlage gelangt. Der Anordnung des Bremselementes relativ zur Bremsrolle entsprechend bewirkt die Aktivierungseinheit eine Zugbewegung oder eine Druckbewegung im Koppelelement.

Das Bremselement ist vorzugsweise an dem Ende des Koppelelementes angeordnet, das in die Richtung zur Bremseinheit weist, wobei die Ausgestaltung des Bremselementes so eingerichtet sein kann, dass dieses unmittelbar gegen die Bremsrolle drückt oder dass das Bremselement im Fußbereich der Rollenleiste einen Kipppunkt aufweist, sodass bei einem Druck des Koppelementes gegen das Bremselement eine Verkippung des Bremselementes gegen die Mantelfläche der Bremsrolle eingeleitet wird. Durch die Drehrichtung der Bremsrolle wirkt diese mit einer Kraft auf das Bremselement ein, das das Bremselement in Richtung zum Fußbereich der Rollenleiste drückt und das Bremselement gewissermaßen in den sich verjüngenden Spalt zwischen der Bremsrolle und dem Fußbereich der Rollenleiste hineinzieht. Folglich kann mit bereits geringen Druckkräften im Koppelement eine große Bremswirkung auf die Bremsrolle erzielt werden, sodass auch schwere Lagereinheiten bereits mit einer sehr geringen Aktivierungskraft durch die Aktivierungseinheit abgebremst werden können. Dabei ist es auch denkbar, dass mit einer Aktivierungseinheit mehrere Bremseinheiten in Verbindung mit mehreren Bremsrollen aktivierbar sind.

Insbesondere kann das Bremselement als Teil der Bremseinheit so ausgestaltet und angeordnet sein, dass dieses über einem Umfangssegment der Bremsrolle an dieser zur Anlage gebracht werden kann, wenn entweder eine Zugkraft oder eine Druckkraft in das Koppelelement eingeleitet wird. Das Umfangssegment am Bremselement weist vorzugsweise einen Radius auf, der dem Umfangsradius der Bremsrolle entspricht. Das Bremselement wird dabei insbesondere im Bereich der Gummierung der Bremsrolle an dieser zur Anlage gebracht.

Die Rollenleisten weisen einen U-förmigen Querschnitt auf, wobei sich das Koppelelement unter den Rollen zum Tragen der Lagereinheiten hinweg innerhalb der Rollenleiste erstreckt und wobei das Bremselement in einem Zwischenraum zwischen einer Rolle zum Tragen und einer Bremsrolle angeordnet ist. Das Koppelelement kann dabei auch mehrteilig ausgeführt sein und wenigstens einen auswechselbaren Bestandteil umfassen, um in Abhängigkeit der unterlaufenen Anzahl der Tragrollen die Länge des Koppelelementes anzupassen. Beispielsweise können die mehreren Bestandteile des Koppelelementes miteinander steckbar verbunden werden. Dabei kann es hinreichend sein, dass das Koppelelement lediglich im unteren Bereich des U-förmigen Querschnitts der Rollenleisten einliegt, ohne eine separate Führung für das Koppelelement vorzusehen. Insbesondere dann, wenn eine Druckkraft in das Koppelelement eingeleitet wird, und das Bremselement über das Umfangssegment gegen die Bremsrolle gelangt, wird durch die Kraftverhältnisse das Koppelelement an den Bodensteg des U-förmigen Querschnitts der Rollenleiste angedrückt, und führt nicht zu einem Kontakt der weiteren Rollen, die nur zum Tragen der Lagereinheiten dienen.

Die Aktivierungseinheit umfasst vorzugsweise ein Hebelelement, das an der Rollenleiste schwenkbar aufgenommen ist und wobei das Hebelelement einen in den Bewegungsraum der Lagereinheiten hinein schwenkbaren Abgriffsabschnitt und einen Anlenkabschnitt umfasst, wobei das Koppelelement zumindest mittelbar an den Anlenkabschnitt angebunden ist. Das Hebelelement selbst ist mittels einer Schwenkachse schwenkbar an der Rollenleiste angebunden, wobei die Schwenkachse sich in der gleichen Ebene erstrecken kann wie auch die Achsen zur Aufnahme der gewöhnlichen Rollen zum Tragen der Lagereinheiten sowie auch der Bremsrollen.

Mit Bezug auf die Schwenkachse befindet sich der Abgriffsabschnitt zum Kontakt mit der Lagereinheit auf einer ersten Seite und der Anlenkabschnitt auf einer gegenüberliegenden Seite, wobei der Abgriffsabschnitt eine größere Länge aufweist als der Anlenkabschnitt, um eine Kraftverstärkung in das Koppelelement hinein zu erreichen. So kann mit einer bereits geringen Kontaktkraft des Abgriffsabschnittes des Hebelelementes relativ zur Lagereinheit eine bereits große Kraft in das Koppelelement eingeleitet werden.

Die Anbindung des Koppelelementes an den Anlenkabschnitt des Hebelelementes umfasst vorzugsweise eine Koppelfeder, die bei einer Aktivierung des Koppelelementes auf Zug spannt und/oder eine Zugspannung in der Koppelfeder erhöht wird. Beispielsweise kann die Koppelfeder ausgehend von einem Ruhezustand keine Längung erfahren, bis das Bremselement tatsächlich gegen die Bremsrolle gelangt, und erst bei Aufbringung einer Bremskraft des Bremselementes gegen die Bremsrolle erfolgt ein leichter Längenzuwachs und insofern auch ein Kraftzuwachs in der Koppelfeder. Dies geschieht erst bei einem vollständigen Herunterdrücken des Abgriffsabschnittes des Hebelelementes durch eine überlaufende Lagereinheit, wodurch ein Kraftanstieg über die Koppelfeder in das Koppelelement übertragen wird, der hinreichend groß ist, um die Bremsrolle vollständig zum Stillstand zu bringen, auch bei einer Lagereinheit mit einem größeren Gewicht.

Die Koppelfeder führt dabei zu dem Vorteil, dass Montagetoleranzen und Längenausgleiche über die Koppelfeder erfolgen können, und bei einem Verschleiß der Bremsrolle und/oder des Bremselementes kann ebenfalls ein Ausgleich desselben durch die Koppelfeder erfolgen, die einen möglichen längeren Bewegungsweg des Koppelelementes ausgleichen kann.

Mit weiterem Vorteil ist eine Rückstellfeder eingerichtet, die eine Kraft auf das Hebelelement und/oder auf das Koppelelement ausübt, die eine Rückführung der Vorrichtung in eine Freigabeposition der Bremsrolle bewirkt. Wird die Kraft auf das Hebelelement wieder zurückgenommen, beispielsweise wenn eine Lagereinheit von der Rollenleiste entnommen wird, so kann die Rückstellfeder das Hebelelement mit der Koppelfeder und mit dem Koppelelement und insofern auch mit dem Bremselement wieder in eine Ausgangslage zurückführen, in der das Bremselement nicht in Kontakt mit der Bremsrolle steht.

Über der Länge der Rollenbahn können mehrere Vorrichtungen zur Vereinzelung der Lagereinheiten eingerichtet sein, wobei die Aktivierungseinheit und die Bremseinheit so beabstandet zueinander in oder an der Rollenleiste eingerichtet sind, dass eine vorauseilende Lagereinheit eine Aktivierungseinheit einer ersten Vorrichtung aktiviert und damit eine nachlaufende Lagereinheit mittels der Bremseinheit einer nachgeordneten Vorrichtung stoppt.

Die Erfindung richtet sich ferner auf ein Durchlaufregal mit wenigstens einer und vorzugsweise mit mehreren Rollenbahnen, die eine Ausgestaltung aufweisen, wie diese vorstehend beschrieben ist. Insbesondere weist das Durchlaufregal mehrere Rollenbahnen jeweils umfassend wenigstens eine oder vorzugsweise mehrere Vorrichtungen mit den Merkmalen des Anspruches 1 auf.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1a: eine Seitenansicht einer Rollenbahn mit einer Vorrichtung gemäß der Erfindung,
- Fig. 1b: eine Draufsicht der Rollenbahn gemäß Figur 1a,
- Fig. 1c: eine geschnittene Seitenansicht der Rollenbahn gemäß Figur 1a.
- Fig. 2: eine Detailansicht der Aktivierungseinheit 14 und der Bremseinheit 15 der Vorrichtung 13,
- Fig. 2a: eine Detailansicht der Anordnung des Bremselementes relativ zur Bremsrolle,
- Fig. 2b: eine Detailansicht der Anordnung des Hebelelementes der Aktivierungseinheit,
- Fig. 3a: eine Ansicht der Aktivierungseinheit und der Bremseinheit in einem nicht aktiviertem Zustand,
- Fig. 3b: eine Ansicht der Aktivierungseinheit und der Bremseinheit in einem voraktiviertem Zustand,
- Fig. 3c: die Aktivierungseinheit und die Bremseinheit in einem vollständig aktivierten Zustand, in dem die Bremsrolle blockiert ist,
- Fig. 4: eine Ansicht der Bremseinheit mit der Anordnung eines Bremselementes am Koppelelement, das über eine Zugkraft im Koppelelement aktiviert werden kann,
- Fig. 5: eine Ansicht einer Rollenbahn mit mehreren Vorrichtungen umfassend die Aktivierungseinheit und die Bremseinheit in Kontakt mit mehreren Lagereinheiten.

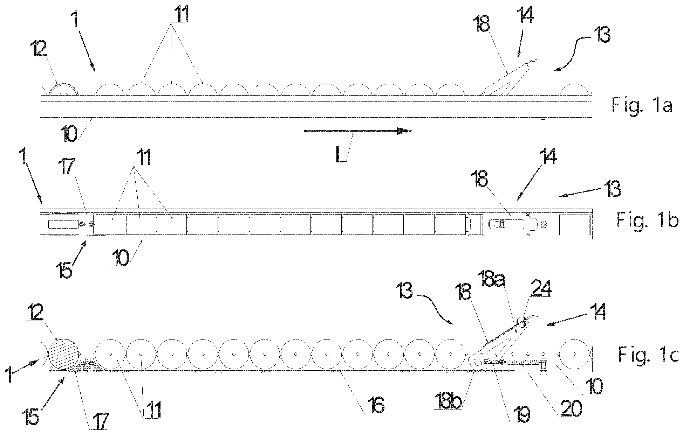

Die Figuren 1a, 1b und 1c zeigen jeweils eine Rollenbahn 1, und in Figur 1a ist diese in einer Seitenansicht, in Figur 1b in einer Draufsicht und in Figur 1c in einer Schnittansicht dargestellt. Die Rollenbahn 1 umfasst zunächst eine Rollenleiste 10, in der eine Vielzahl von Rollen 11 zum Tragen von nicht dargestellten Lagereinheiten wie Paletten, Kartons, Kisten aller Art und dergleichen angeordnet sind. Die Rollenbahn 1 wird mit einem in Längsrichtung L weisenden Gefälle installiert (nicht dargestellt), sodass Lagereinheiten, die auf die Rollen 11 aufgestellt werden, schwerkraftbedingt in der Bildebene nach rechts verfahren.

Die in der Ansicht gezeigte Vorrichtung 13 zur Vereinzelung mehrerer hintereinander verfahrender Lagereinheiten umfasst als wesentliche Bestandteile eine Aktivierungseinheit 14 und eine Bremseinheit 15, wobei in der Rollenbahn 1 bei einer Vielzahl von Rollen 11 zum Tragen der Lagereinheiten auch Bremsrollen 12 eingerichtet sind, die die Lagereinheiten abbremsen können. Sind die Bremsrollen 12 frei drehbar, so bewirken diese eine Verlangsamung der Lagereinheiten auf der Rollenbahn 1. Die Bremsrollen 12 sind dabei ebenso wie die gewöhnlichen Rollen 11 zum Tragen der Lagereinheiten in der Rollenleiste 10 eingefasst, wobei die Bremsrollen 12 geringfügig höher aufbauen als die Rollen 11, sodass sichergestellt ist, dass eine Lagereinheit tatsächlich mit einer Bremsrolle 12 in Reibkontakt kommt. Um einen Reibkontakt der Bremsrolle 12 mit der Unterseite der Lagereinheit zu erzeugen, weist die Bremsrolle 12 auf ihrer Umfangsfläche wenigstens abschnittsweise eine Gummierung auf.

Die gezeigte Vorrichtung 13 umfasst eine Aktivierungseinheit 14 mit einem Hebelelement 18 sowie einer Bremseinheit 15 mit einem Bremselement 17 und einer Bremsrolle 12. Zwischen der Aktivierungseinheit 14 und der Bremseinheit 15 erstreckt sich ein Koppelelement 16, an dessen zur Bremsrolle 12 weisenden Ende das Bremselement 17 angeordnet ist.

Wird durch eine Überfahrt einer Lagereinheit das Hebelelement 18 heruntergedrückt, so wird das Koppelelement 16 in der gezeigten Darstellung nach links verlagert, sodass das Bremselement 17 in Kontakt mit der Bremsrolle 12 gelangt, um diese festzusetzen und um eine über die Bremsrolle 12 laufende Lagereinheit zu stoppen.

Hierfür weist das Hebelelement 18 einen Abgriffsabschnitt 18a und einen Anlenkabschnitt 18b auf, wobei gemäß Figur 1c im Abgriffsabschnitt 18a wahlweise ebenfalls eine Kontaktrolle 24 eingebracht sein kann. Die Anlenkung des Koppelelementes 16 erfolgt über den Anlenkabschnitt 18b, in dem eine Koppelfeder 19 zwischen einem Anlenkpunkt an dem Anlenkabschnitt 18b und dem Koppelelement 16 angeordnet ist. Zugleich ist eine Rückstellfeder 20 zwischen einem festen Punkt in der Rollenleiste 10 und dem Koppelelement 16 angebracht, und wird das Hebelelement 18 im Uhrzeigersinn verdreht, führt der verschwenkende Anlenkabschnitt 18b mit der Koppelfeder 19 das Koppelelement 16 nach links und bringt das Bremselement 17 zur Anlage. Gleichzeitig spannt die Rückstellfeder 20.

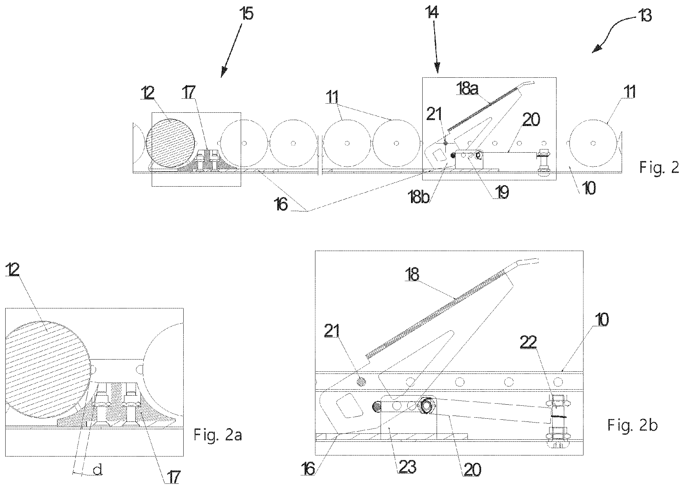

Figur 2 zeigt eine Detailansicht der Aktivierungseinheit 14 mit dem Hebelelement 18 umfassend den Abgriffsabschnitt 18a und den Anlenkabschnitt 18b sowie eine Detailansicht der Bremseinheit 15 mit der Bremsrolle 12 und dem Bremselement 17. Das Hebelelement 18 ist in der Schwenkachse 21 schwenkbar an der Rollenleiste 10 angebracht. Die Rollenleiste 10 weist eine Vielzahl von Aufnahmeöffnungen auf, um die Rollen 11 sowie die Bremsrolle 12 aufzunehmen.

Zwischen der Aktivierungseinheit 14 und der Bremseinheit 15 erstreckt sich das Koppelelement 16, und wird die Aktivierungseinheit 14 aktiviert, indem das Hebelelement 18 im Uhrzeigersinn verdreht, so verlagert sich das Koppelelement 16 über die Koppelfeder 18 unter Spannung der Rückstellfeder 20 nach links, und das Bremselement 17 gelangt in Kontakt mit der Bremsrolle 12 und blockiert diese.

Figur 2a zeigt eine Detailansicht der Anordnung des Bremselementes 17 relativ zur Bremsrolle 12, wobei eine Luft d zwischen dem Kontaktbereich des Bremselementes 17 und der Bremsrolle 12 eingestellt ist. In dieser Situation wird die Bremsrolle 12 freigegeben und kann nur die an sich bekannte, gewöhnliche Bremswirkung zur Verzögerung der Lagereinheit erzeugen.

Figur 2b zeigt dabei die zugeordnete Stellung des Hebelelementes 18 in einem nicht aktivierten Zustand, in dem das Hebelelement 18 unverschwenkt an der Schwenkachse 21 aufgenommen ist. In diesem Zustand erfolgt keine Verlagerung des Koppelelementes 16 nach links, die über die Koppelfeder 19 eingeleitet wird, während die Rückstellfeder 20 spannt. Die Rückstellfeder 20 ist mit einem ersten Ende an einem Zapfen 22 in der Rollenleiste 10 angebunden und mit einem zweiten Ende an einer Verbindungslasche 23 des Koppelelementes 16 angebracht, an der die Koppelfeder 19 sowie die Rückstellfeder 20 angelenkt sind.

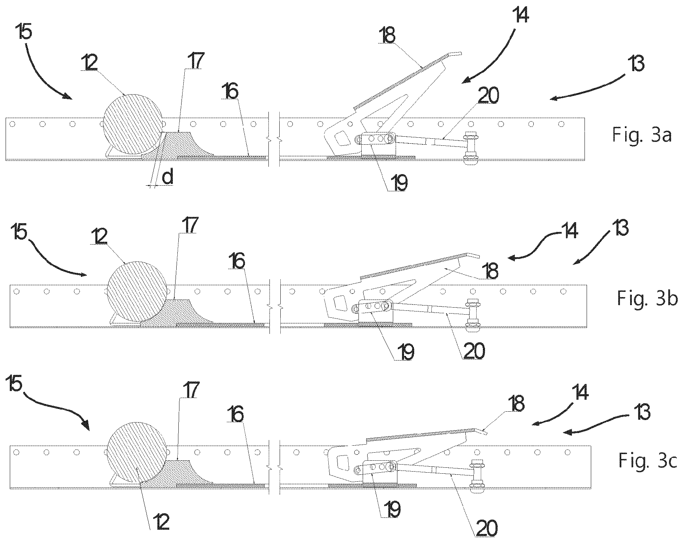

In den Figuren 3a, 3b und 3c sind verschiedene Aktivierungszustände der Vorrichtung 13 gezeigt. In Figur 3a ist die Aktivierungseinheit 14 nicht aktiviert, und das Hebelelement 18 befindet sich in der Ausgangsstellung. Folglich befindet sich eine Luft d zwischen dem Bremselement 17 und der Bremsrolle 12 der Bremseinheit 15, indem das Koppelelement 16 nicht nach links verlagert wurde, und die Position wird gehalten über die Rückstellfeder 20 sowie die Koppelfeder 19.

In Figur 3b ist das Hebelelement 18 im Uhrzeigersinn leicht verschwenkt worden und damit voraktiviert, sodass unter leichter Spannung der Rückstellfeder 20 zunächst die Koppelfeder 19 nur dazu dient, das Koppelelement 16 nach links zu bewegen, bis das Bremselement 17 leicht zur Anlage gegen die Außenumfangsfläche der Bremsrolle 12 gelangt. Die Koppelfeder 19 bleibt dabei zunächst ohne weitere Längung, sodass diese das Koppelelement 16 lediglich mit der ersten Verdrehbewegung des Hebelelementes 18 verlagert.

In Figur 3c wird schließlich das Hebelelement 18 vollständig heruntergedrückt, sodass die Koppelfeder 19 weiter spannt, jedoch die Rückstellfeder 20 in ihrer Längung verbleibt. Durch diesen letzten Spannvorgang erfolgt nun eine Andruckkraft des Bremselementes 17 gegen die Bremsrolle 12, sodass die Aktivierungseinheit 14 vollständig aktiviert ist und die Bremseinheit 15 die Bremsrolle 12 blockiert. Dabei erfolgt eine Längenzunahme der Koppelfeder 19 so weit, dass auch Toleranzen ausgeglichen werden, und durch die Längenzunahme der Rückstellfeder 20 kann bei einer späteren Entnahme einer Lagereinheit das Hebelelement 18 in der in Figur 3c gezeigten Position wieder in die Position zurückversetzt werden, die in der Figur 3a gezeigt ist.

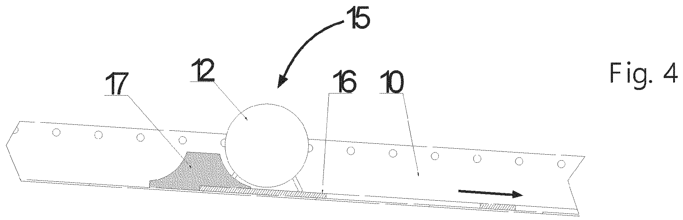

Figur 4 zeigt eine alternative Ausgestaltung der Bremseinheit 15. Im Bodenbereich der Rollenleiste 10 ist das Koppelelement 16 angeordnet, wobei das Bremselement 17 endseitig so am Koppelelement 16 so angeordnet ist, dass diese durch eine Zugkraft im Koppelement 16 gegen die Bremsrolle 12 zur Anlage gebracht werden kann. Dabei ergibt sich eine alternative Ausgestaltung zur Vorrichtung 13 gemäß Figur 3a bis Figur 3c, sodass nicht über eine Druckkraft sondern über eine Zugkraft im Koppelelement 16 die Bremsrolle 12 blockiert werden kann. Die Bremsrolle 12 befindet sich gemäß dieser Anordnung zwischen dem Bremselement 17 und der nicht dargestellten Aktivierungseinheit.

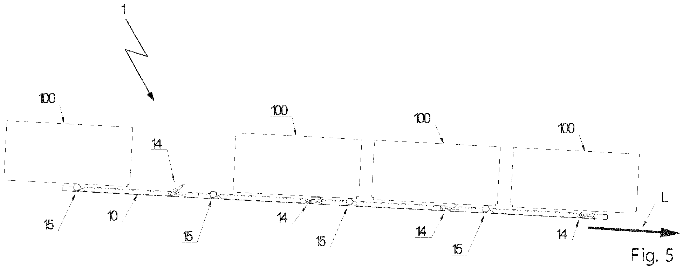

Figur 5 zeigt schließlich eine Rollenbahn 1 mit mehreren Vorrichtungen 13 jeweils umfassend die Aktivierungseinheit 14 und die Bremseinheit 15. Auf der Rollenbahn 10 sind mehrere Lagereinheiten 100 aufgebracht, und die Rollenleiste 10 weist ein Gefälle in Längsrichtung L auf.

Wird beispielhaft die ganz rechts dargestellte Lagereinheit 100 entnommen, so wird die rechts vorhandene Aktivierungseinheit 14 gelöst, und die erste Vorrichtung 13 gibt die zugeordnete rechte Bremseinheit 15 frei. Folglich läuft die zweite Lagereinheit 100 nach, bis diese wieder die Aktivierungseinheit 14 der rechts dargestellten ersten Vorrichtung 13 aktiviert. Insofern ergibt sich eine Blockierung der Bremseinheit 15 der ersten Vorrichtung 13, sodass wiederum die zweite Lagereinheit 100 abgebremst wird. Im Ergebnis ergibt sich wieder die gleiche äquidistante Anordnung der mehreren Lagereinheiten 100 wie dargestellt, allerdings ist jede der Lagereinheiten eine Position nach rechts gerückt. Die Darstellung zeigt lediglich beispielhaft eine letzte Lagereinheit 100, die noch frei über die Bremseinheit 15 abrollen kann, bis schließlich die ganz links dargestellte letzte Lagereinheit 100 die Aktivierungseinheit 14 der links dargestellten Vorrichtung 13 aktiviert, um schließlich eine wiederum nachlaufende Lagereinheit 100 zu stoppen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Rollenbahn

- 10: Rollenleiste
- 11: Rolle
- 12: Bremsrolle
- 13: Vorrichtung
- 14: Aktivierungseinheit
- 15: Bremseinheit
- 16: Koppelelement
- 17: Bremselement
- 18: Hebelelement
- 18a: Abgriffsabschnitt
- 18b: Anlenkabschnitt
- 19: Koppelfeder
- 20: Rückstellfeder
- 21: Schwenkachse
- 22: Zapfen
- 23: Verbindungslasche
- 24: Kontaktrolle

- 100: Lagereinheit

- L: Längsrichtung
- d: Luft

## Patentansprüche

1. Rollenbahn (1) zur Führung von mehreren hintereinander angeordneten Lagereinheiten (100), insbesondere für ein Durchlaufregal, mit wenigstens zwei beabstandet zueinander angeordneten Rollenleisten (10), aufweisend eine Vielzahl von Rollen (11) zum Tragen der Lagereinheiten (100) und einer Anzahl von Bremsrollen (12) zum Abbremsen der Lagereinheiten (100), und wobei zumindest eine Vorrichtung (13) zur Vereinzelung der Lagereinheiten (100) eingerichtet ist,
**dadurch gekennzeichnet,**
**dass** die Vorrichtung (13) zur Vereinzelung der Lagereinheiten (100) eine Aktivierungseinheit (14) aufweist, die bei einem Überlauf einer Lagereinheit (100) aktivierbar ist, und wobei die Vorrichtung (13) eine Bremseinheit (15) zur Einwirkung auf die Bremsrolle (12) aufweist, die über ein Koppelelement (16) von der Aktivierungseinheit (14) blockierbar ist und um eine nachfolgende Lagereinheit (100) in Kontakt mit der Bremsrolle (12) in den Stand zu versetzen.

2. Rollenbahn (1) nach Anspruch 1,
**dadurch gekennzeichnet,**
**dass** das Koppelelement (16) als Zugstange oder als Druckstange ausgebildet ist, um mittels einer durch die Aktivierungseinheit (14) erzeugbaren Druckkraft oder Zugkraft die Bremseinheit (15) zu aktivieren.

3. Rollenbahn (1) nach Anspruch 1 oder 2,
**dadurch gekennzeichnet,**
**dass** die Bremseinheit (15) ein Bremselement (17) umfasst, das gegen die Bremsrolle (12) zur Anlage gelangt, wenn die Aktivierungseinheit (14) aktiviert wird.

4. Rollenbahn (1) nach Anspruch 3,
**dadurch gekennzeichnet,**
**dass** an dem Ende des Koppelelementes (16), das in die Richtung der Bremseinheit (15) weist, das Bremselement (17) angeordnet ist.

5. Rollenbahn (1) nach einem der vorgenannten Ansprüche,
**dadurch gekennzeichnet,**
**dass** das Bremselement (17) so ausgestaltet und angeordnet ist, dass dieses über einem Umfangssegment der Bremsrolle (12) an dieser zur Anlage bringbar ist, wenn die Zugkraft oder die Druckkraft in das Koppelelement (16) eingeleitet wird.

6. Rollenbahn (1) nach einem der vorgenannten Ansprüche,
**dadurch gekennzeichnet,**
**dass** die Rollenleisten (10) einen U-förmigen Querschnitt aufweisen, wobei sich das Koppelelement (16) unter den Rollen (11) zum Tragen hinweg innerhalb der Rollenleiste (10) erstreckt und wobei das Bremselement (17) in einem Zwischenraum zwischen einer Rolle (11) zum Tragen und einer Bremsrolle (12) angeordnet ist.

7. Rollenbahn (1) nach einem der vorgenannten Ansprüche,
**dadurch gekennzeichnet,**
**dass** die Aktivierungseinheit (14) ein Hebelelement (18) umfasst, das an der Rollenleiste (10) schwenkbar aufgenommen ist und wobei das Hebelelement (18) einen in den Bewegungsraum der Lagereinheiten (100) schwenkbaren Abgriffsabschnitt (18a) und einen Anlenkabschnitt (18b) umfasst, wobei das Koppelelement (16) zumindest mittelbar an den Anlenkabschnitt (18b) angebunden ist.

8. Rollenbahn (1) nach Anspruch 7,
**dadurch gekennzeichnet,**
**dass** die Anbindung des Koppelelementes (16) an den Anlenkabschnitt (18b) des Hebelelementes (18) eine Koppelfeder (19) umfasst, die bei einer Aktivierung des Koppelelementes (16) auf Zug spannt und/oder eine Zugspannung in der Koppelfeder (19) erhöht wird.

9. Rollenbahn (1) nach einem der vorgenannten Ansprüche,
**dadurch gekennzeichnet,**
**dass** eine Rückstellfeder (20) eingerichtet ist, die eine Kraft auf das Hebelelement (18) und/oder auf das Koppelelement (16) ausübt, die eine Rückführung der Vorrichtung (13) in eine Freigabeposition der Bremsrolle (12) bewirkt.

10. Rollenbahn (1) nach einem der vorgenannten Ansprüche,
**dadurch gekennzeichnet,**
**dass** zwischen der Aktivierungseinheit (14) und der Bremselement (17) mehrere Rollen (11) zum Tragen angeordnet sind.

11. Rollenbahn (1) nach einem der vorgenannten Ansprüche,
**dadurch gekennzeichnet,**
**dass** über der Länge der Rollenbahn (1) mehrere Vorrichtungen (13) zur Vereinzelung der Lagereinheiten (100) eingerichtet sind, wobei die Aktivierungseinheit (14) und die Bremseinheit (15) so beabstandet in der Rollenleiste (10) eingerichtet sind, dass eine vorauseilende Lagereinheit (100) eine Aktivierungseinheit (14) einer ersten Vorrichtung (13) aktiviert und damit eine nachlaufende Lagereinheit (100) mittels der Bremseinheit (15) stoppt.

12. Durchlaufregal mit wenigstens einer Rollenbahn (1) nach einem der vorgenannten Ansprüche.
